# NOUVEAU FASCICULE DE BREVET EUROPEEN

(11) **EP 3 009 812 B2**
(45) Date de publication et mention de la décision concernant l'opposition: **22.04.2020**
(45) Mention de la délivrance du brevet: 21.06.2017
(21) Numéro de dépôt: 15306610.5
(22) Date de dépôt: 12.10.2015
(51) Int. Cl.: G01D 11/30

(54) **DISPOSITIF DÉTECTEUR À CONSTITUTION MODULAIRE ET ÉQUIPEMENT INDUSTRIEL LE COMPORTANT**
MODULAR AUFGEBAUTE ERFASSUNGSVORRICHTUNG, UND DIESE UMFASSENDE INDUSTRIEAUSRÜSTUNG
SENSOR DEVICE WITH MODULAR CONSTITUTION AND INDUSTRIAL SYSTEM COMPRISING SAME

(30) Priorité: 16.10.2014 FR 1459933
(43) Date de publication de la demande: 20.04.2016
(73) Titulaire: Senstronic (Société Par Actions Simplifiée), 67700 Saverne (FR)
(72) Inventeur: FRANC, Joël, 67201 ECKBOLSHEIM (FR); HAMANN, Benoît, 67340 LICHTENBERG (FR)
(74) Mandataire: Nuss, Laurent

(56) Documents cités:
- EP-A1- 2 546 614
- EP-A2- 1 426 143
- EP-A2- 1 623 795
- WO-A1-01/23856
- WO-A1-2007/089329
- WO-A1-2008/077737
- WO-A2-2009/127954
- DE-A1- 4 033 052
- DE-A1- 10 141 400
- DE-A1- 19 923 985
- DE-A1- 19 940 453
- DE-A1-102004 017 899
- DE-A1-102006 003 916
- DE-A1-102008 002 938
- DE-A1-102008 012 570
- DE-A1-102008 029 956
- DE-A1-102012 108 415
- DE-A1-102014 101 363
- DE-U1- 29 718 644
- DE-U1-202006 006 614
- FR-A1- 2 777 353
- FR-A1- 2 973 506
- US-A1- 2009 195 409
- US-B1- 6 250 149
- "Abfrage Schnell Wechseln", Tunkers, 25 September 2012 (2012-09-25), pages 1-6,
- "APPs for Automation", Unterlagen zum Symposium, 2013, pages 1-170,

## Description

La présente invention concerne le domaine de la détection, plus particulièrement dans un environnement industriel, mettant en oeuvre des moyens intégrés au moins partiellement dans des équipements, machines, installations ou analogues pour y surveiller des modifications de configuration, d'état ou tout autre changement physique, et présentant au moins une partie dite "raccordement utilisateur" susceptible d'être exposée à des agressions extérieures, tels que des chocs, des contraintes ou des sollicitations, pouvant les endommager.

Dans ce contexte, l'invention a pour objet un dispositif détecteur avec une partie raccordement extérieur aisément amovible.

Les dispositifs détecteurs visés, correspondant à celui mentionné au préambule de la revendication 1, comprennent de manière générale, d'une part, une partie apparente et rapportée extérieurement assurant au moins la transmission des signaux provenant des capteurs et le raccordement physique, et éventuellement un traitement au moins partiel desdits signaux, cette première partie étant typiquement montée sur la face extérieure de l'équipement concerné, et, d'autre part, une partie "noyée", comprenant les capteurs disséminés sur ou dans l'équipement aux endroits à surveiller, et généralement au moins partiellement intégrés dans la structure de l'équipement.

Actuellement, ces dispositifs détecteurs sont le plus souvent réalisés comme des sous-ensembles d'un seul tenant et l'endommagement de leur partie exposée (choc, impact, traction exagérée sur le câble de raccordement) oblige à remplacer la totalité du dispositif. Ceci est non seulement onéreux, mais également fastidieux et peut entraîner des arrêts machines importants impactant la productivité (notamment du fait d'un démontage au moins partiel de l'équipement pour enlever les capteurs intégrés et d'une possible phase de réglage ou de calibration des nouveaux capteurs).

Pour tenter de surmonter cet inconvénient, il a été proposé de rendre les parties constitutives séparables, c'est-à-dire de prévoir un boîtier de raccordement relié de manière amovible au(x) capteur(s) intégré(s).

Toutefois, les solutions existantes de ce dernier type ne donnent pas entière satisfaction, la réalisation simultanée de la liaison électrique et de la fixation mécanique pouvant être délicate, sans garantie d'une répétabilité fiable, indépendante notamment de la qualité du travail de l'opérateur.

Par le document WO 01/23856, on connaît un dispositif pour l'installation d'un module capteur de pression. Dans ce dispositif connu, le module capteur de pression et ses circuits annexes sont tous logés dans la chambre étanche d'un boîtier de protection monobloc. Ce boîtier comporte d'un côté un taraudage pour un montage par vissage sur l'extrémité filetée d'un conduit et de l'autre côté un embout fileté et pourvu de broches de contact électrique pour la fixation d'un module convertisseur séparé, avec établissement simultané d'un raccordement électrique.

La réalisation divulguée par ce document est spécifiquement dédiée à la mesure de la pression fluidique à l'extrémité d'un conduit et comporte deux composantes structurelles dont l'assemblage et leur montage se fait exclusivement par vissage, le module capteur étant logé dans l'une des deux composantes. Un dispositif détecteur est connu du document EP 1426143A2.

La présente invention a notamment pour but de surmonter les limitations de l'état de la technique précité en relation avec le type de dispositif détecteur évoqué dans le préambule de la revendication 1.

Ce but est atteint grâce aux caractéristiques de la partie caractérisante de la revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation latérale d'un mode de réalisation d'un dispositif détecteur selon l'invention installé sur un équipement industriel (vu en coupe) ;
les figures 2A et 2B sont des vues en coupe (selon deux demi-plans décalés, mutuellement parallèles et passant respectivement par les axes du connecteur et de la vis de fixation du boîtier) du dispositif représenté figure 1, la partie raccordement extérieur (boîtier de raccordement) du dispositif étant respectivement assemblé avec (Fig. 2A) et partiellement désolidarisé (Fig. 2B) de la partie interface de liaison (embase) ;
les figures 2C et 2D sont des vues similaires à celle de la figure 2A, illustrant des variantes de fixation de l'ensemble boîtier/embase sur l'équipement ;
la figure 3 est une vue de détail, à une échelle différente, d'une partie de l'objet représenté figure 2B ;
les figures 4A et 4B sont des vues en perspective selon deux directions différentes du dispositif détecteur représenté figures 1 et 2, à l'état mutuellement emboîté des deux composantes de la partie apparente du détecteur, et,
les figures 5A et 5B sont des vues similaires à celles des figures 4A et 4B respectivement, à l'état séparé des composants de la partie apparente (non intégrable) du détecteur ;
les figures 6A et 6B sont des vues de détail, à une échelle différente, des composants réalisant la connexion électrique entre le boîtier de raccordement et l'embase, ces deux parties constitutives du dispositif détecteur étant respectivement dans les états représentés figures 2A et 2B ;
la figure 7 est une vue éclatée en perspective de l'ensemble embase/capteurs faisant partie du dispositif selon l'invention et représenté par exemple figures 5A et 5B ;
les figures 8A et 8B sont des vues en perspective de la face inférieure (destinée à être appliquée contre l'équipement) de la plaque creuse de l'embase représentée figure 7, respectivement avant (figure 8A) et après (figure 8B) raccordement mécanique et électrique des câbles de liaison des capteurs (et avant résinage), et,
la figure 9 est une vue en perspective similaire à celle de la figure 4A, illustrant une variante de réalisation du boîtier de raccordement (connecteur positionné latéralement).

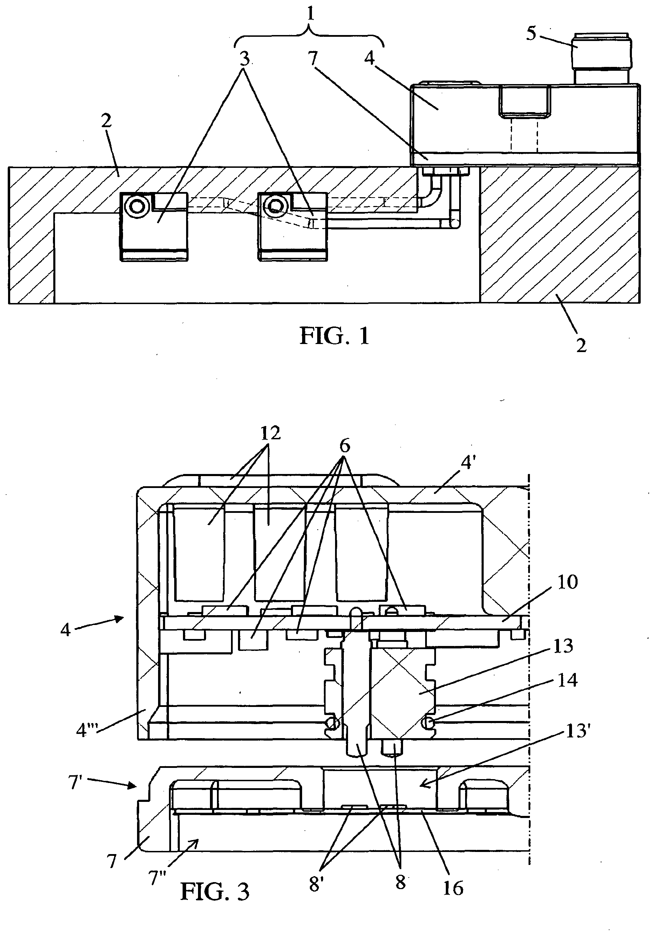

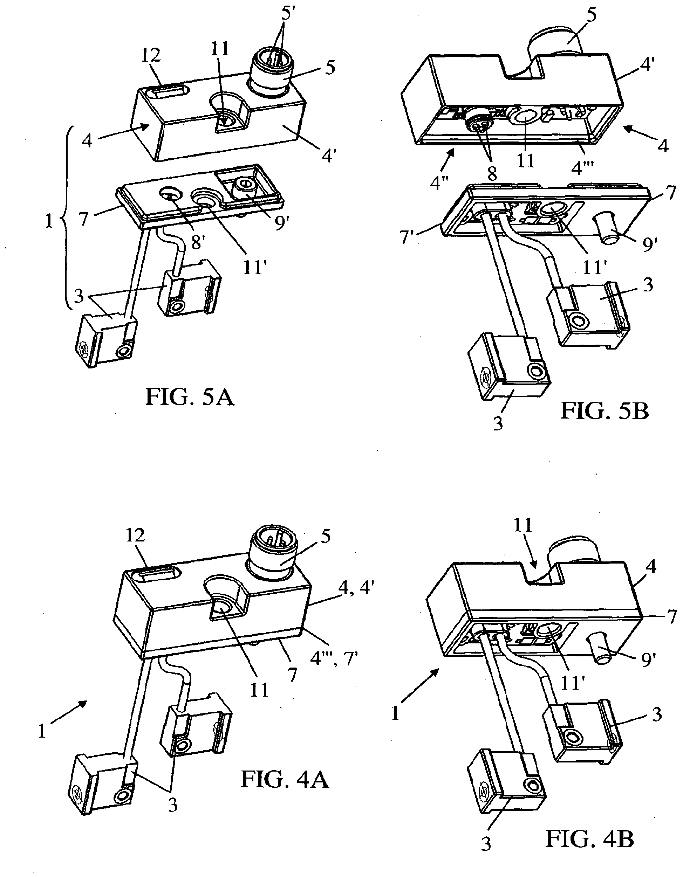

Les figures 1, 2, 4 et 5 montrent un dispositif détecteur 1 destiné à être installé sur une machine, un poste de travail, une installation de traitement ou de fabrication ou un équipement 2 industriel et/ou technique analogue.

Ce dispositif détecteur 1 comprend au moins un capteur 3 monté sur ou dans l'équipement 2, en étant éventuellement au moins partiellement intégré dans ce dernier, et un boîtier de raccordement 4, relié au(x) détecteur(s) 3 (sur les figures deux capteurs 3 installés dans l'équipement 2 à des emplacements différents). Ce boîtier 4 comporte au moins un connecteur 5 pour une liaison filaire externe et est fixé à un endroit aisément accessible de l'équipement 2 concerné, le cas échéant en surface et de manière proéminente. Ledit dispositif détecteur 1 intègre des moyens fonctionnels 6 aptes à réaliser des opérations de traitement, de conditionnement et/ou d'évaluation des signaux générés au niveau du ou des capteur(s) 3.

Le dispositif détecteur 1 comprend également une embase 7 formant simultanément, d'une part, interface de montage mécanique pour le boîtier de raccordement 4 sur l'équipement 2 et, d'autre part, interface de connexion électrique entre ledit boîtier 4 et le(s) capteur(s) 3, les liaisons mécanique(s) et électrique(s) amovibles entre boîtier et embase étant établies simultanément par simple emboîtement du boîtier 4 sur l'embase 7 et les moyens fonctionnels 6 (intégrant notamment les composants sur les cartes 10 et 16, et ceux intégrés dans les capteurs 3) étant répartis physiquement entre le(s) capteur(s) 3, l'embase 7 et le boîtier 4.

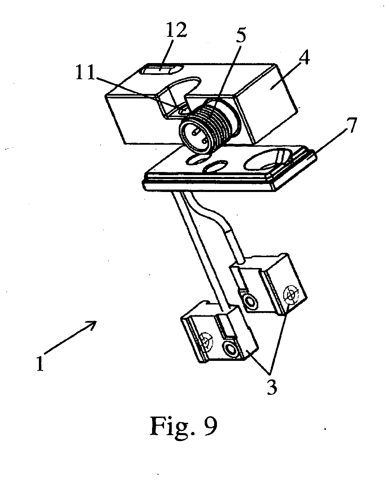

L'invention fournit ainsi un dispositif détecteur 1 à structure modulaire, tant au niveau physique, qu'au niveau fonctionnel, avec trois parties ou entités constitutives distinctes, à savoir le(s) capteur(s) 3, l'embase 7 et le boîtier 4. Deux des parties 4 et 7 sont assemblées mécaniquement entre elles pour former une unité structurelle montée sur la face extérieure de l'équipement 2 en un endroit aisément accessible pour un opérateur pour effectuer un montage/démontage du boîtier 4 au moins et/ou un raccordement du connecteur 5. La troisième partie constitutive (le(s) capteur(s) 3) est quant à elle située à distance des deux premières parties 4 et 7 (voir figures 1, 2, 4, 5 et 9), par exemple à distance de la surface de l'équipement 2. Une telle construction autorise un changement aisé de la partie la plus exposée aux risques d'endommagement (boîtier 4), sans avoir à intervenir sur les autres parties intégrées ou affleurantes (capteurs 3 et embase 7). De plus, il est également possible de remplacer un boîtier de raccordement 4 donné par un autre présentant des moyens fonctionnels 6 et/ou des connecteurs 5 différents, ou positionnés différemment, ou encore une forme ou un encombrement adapté à un autre environnement extérieur (lorsque ce dernier change par exemple).

La liaison bidirectionnelle (alimentation/transmission de signaux) entre l'embase 7 et les capteurs 3 est de nature filaire (câbles 3').

Une transmission de signaux vers les capteurs 3, en vue de leur recalibration et/ou de leur paramétrage, peut être envisagée.

Le boîtier de raccordement 4 est préférentiellement monté sur une surface apparente de l'équipement 2, aisément accessible pour des outils ou analogues.

Plus précisément, et comme le montrent également les figures, le boîtier de raccordement 4 est monté en surface et de manière proéminente sur l'équipement 2 en étant emboîté sur l'embase 7. De plus, l'embase 7, en application directe sur l'équipement 2, présente une hauteur apparente faible par rapport à celle du boîtier 4 (par exemple dans un rapport de l'ordre de 1/4 à 1/10) et fait préférentiellement état d'une conformation générale en forme de plaque de faible épaisseur.

Ainsi, les deux parties de l'ensemble structurel exposé du dispositif détecteur 1, à savoir le couple boîtier 4/embase 7, ne sont pas égales par rapport aux agressions extérieures, cela en accord avec un des objectifs de l'invention.

En effet, le boîtier 4 à structure proéminente avec une surface apparente importante, positionné sur le dessus de l'ensemble 4, 7, et comportant le connecteur 5 (lui-même saillant et raccordable à un lien physique), est nettement plus exposé et sensible aux agressions extérieures que l'embase 7 qui est plaquée contre la surface de l'équipement, présente une faible surface apparente (par rapport au boîtier 4 **-** uniquement sa tranche est exposée) et est recouverte par le boîtier 4.

En contrepartie, l'invention vise à rendre ce boîtier 4 aisément interchangeable.

De plus, pour limiter la transmission des contraintes à l'embase 7, en cas de choc important au niveau du boîtier 4 ou d'une traction de forte intensité au niveau du connecteur 5, il peut être avantageusement prévu que la liaison par emboîtement entre l'embase 7, préférentiellement en forme de plaque, et le boîtier 4 définit un plan d'assemblage, lequel correspond sensiblement à un plan de rupture privilégiée de ladite liaison.

Ces deux plans peuvent être confondus ou être légèrement décalés entre eux (tout en demeurant mutuellement parallèles), le plan de rupture étant avantageusement situé à proximité ou au niveau de la face supérieure de l'embase 7.

La connexion électrique amovible (entre le boîtier 4 et l'embase 7) est réalisée par contact, sous contrainte élastique, entre des premiers moyens 8 sous forme de broches, de tiges ou analogues, d'une part, et des seconds moyens 8' sous forme de sites d'appui, de réception ou analogues, d'autre part, ces deux types de moyens 8, 8' étant arrangés, l'un, dans le boîtier de raccordement 4 et, l'autre, dans l'embase 7 respectivement.

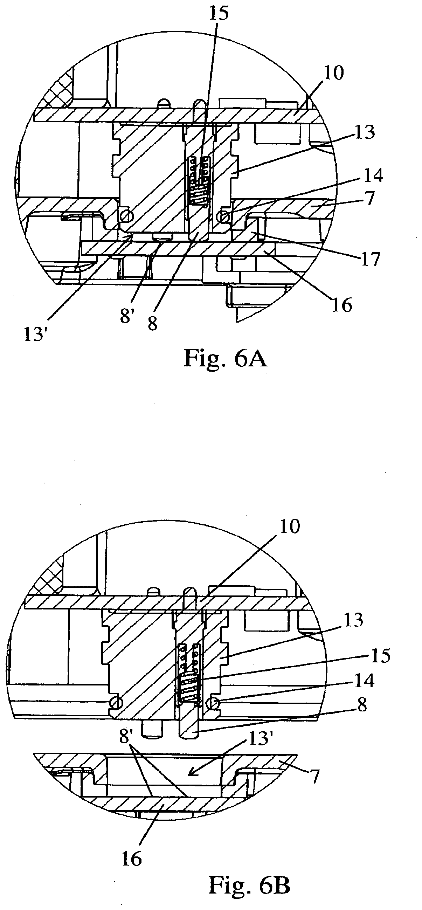

En accord avec l'invention, ressortant plus précisément des figures 3, 6A et 6B, les broches ou tiges 8 sont montées dans un corps isolant rigide 13 rapporté ou intégré dans le boîtier 4 et en ce que les sites d'appui 8' du type pastille ou plot sont disposés au fond d'une dépression ou d'un renfoncement 13' formé(e) dans l'embase 7, le corps isolant 13 s'emboîtant dans le renfoncement 13' à l'état assemblé de l'ensemble boîtier 4/embase 7, préférentiellement avec réalisation d'une étanchéité périphérique, par exemple par l'intermédiaire d'un joint de compression torique 14 monté sur le corps isolant 13.

L'emboîtement mâle/femelle du corps 13 dans le renfoncement 13', avantageusement tous deux de section circulaire, contribue à la rigidité de l'assemblage boîtier 4/embase 7 et garantit le contact électrique, tout en autorisant une séparation aisée des deux parties 4 et 7.

Le joint 14 quant à lui permet de garantir une étanchéité de la liaison électrique par rapport au plan d'assemblage du boîtier 4 avec l'embase 7.

La liaison électrique par contact entre les broches 8 et les pastilles 8' est une liaison par contact ponctuel sous pression élastique, chaque broche 8 étant avantageusement montée avec faculté de coulissement limité dans le corps isolant 13 et sollicitée élastiquement vers l'extérieur sous l'action d'un ressort 15 associé. Une telle liaison permet d'éviter tout endommagement de l'embase 7 et des sites 8' en cas d'arrachement du boîtier 4 ou d'impact important sur ce dernier.

Conformément à une autre caractéristique en relation avec une variante de réalisation avantageuse de l'invention, ressortant plus particulièrement des figures 3, 6A et 6B, les pastilles 8' sont formées sur une carte 16 à circuits imprimés, disposée dans un logement creux 7" ménagé dans l'épaisseur de l'embase 7 en forme de plaque, reliée électriquement au(x) câble(s) 3' réalisant la liaison filaire avec le(s) capteur(s) 3 et constituant le fond du renfoncement 13' formé dans l'embase 7, ledit logement creux 7" étant préférentiellement comblé par résinage.

Pour pouvoir assurer un positionnement précis entre les éléments à relier électriquement, en particulier lors du résinage du logement creux 7" de l'embase 7, et simultanément contribuer à la résistance de la liaison filaire de capteur 3 avec l'embase 7, la carte 16 réalisant la connexion électrique entre le(s) capteur(s) 3 et le boîtier 4 est reliée mécaniquement, d'une part, à l'extrémité du ou de chaque câble 3' et, d'autre part, à l'embase 7.

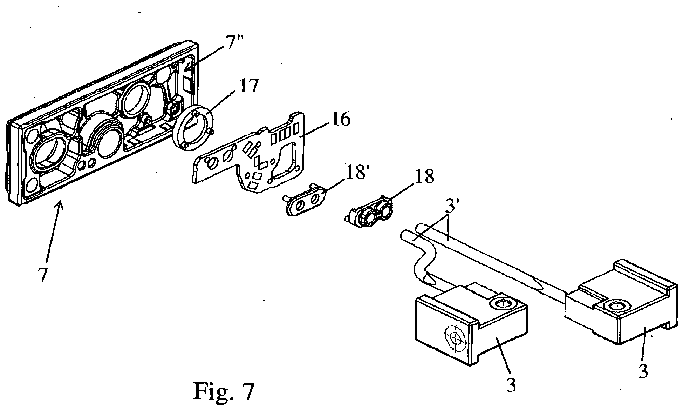

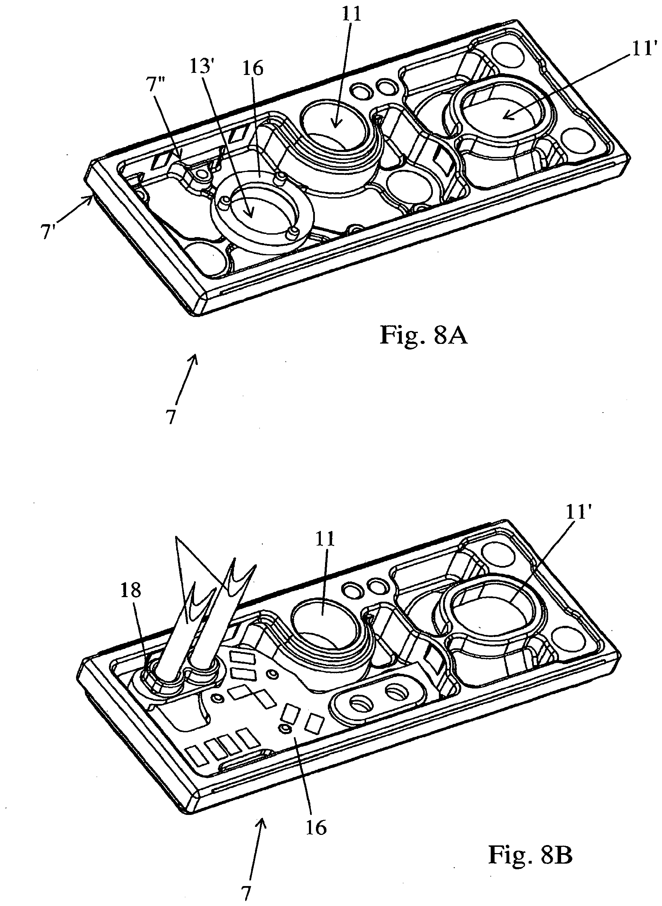

Les figures 7 et 8 illustrent, à titre non limitatif, un exemple pratique de réalisation de telles liaisons mécaniques.

Ainsi, ladite carte 16 peut être fixée sur l'extrémité extérieure de la portion de conduit ou l'embout formant la paroi latérale du renfoncement 13' par un anneau 17 pourvu de picots, ledit anneau 17 étant embouti sur la portion de paroi et les picots venant en engagement dans des orifices correspondants de la carte 16 (figures 7 et 8A).

Les extrémités des câbles 3' devant être reliées électriquement à la carte 16 (et donc aux pastilles 8') peuvent être maintenues rigidement et guidées (positionnement répétable) par un guide câble 18, avantageusement monté sur la carte 16 (figures 7 et 8B). Eventuellement, une pièce additionnelle 18' assure un ancrage de la carte 16 et contribue à une solidarisation supplémentaire de cette dernière avec l'embase 7 (par des picots ou des ergots à emboîter).

Lorsque le corps de l'embase 7 consiste en du métal (pièce obtenue par moulage), l'anneau 17 peut avantageusement être réalisé en un matériau isolant.

On peut noter sur les figures annexées que les moyens fonctionnels 6, la carte 16 et les pastilles 8', c'est-à-dire l'ensemble des composants contribuant au traitement et à la transmission des signaux, ainsi qu'à l'alimentation des capteurs 3 sont logés dans l'épaisseur de l'embase 7, en particulier en retrait de sa face supérieure ou en étant recouverts par cette dernière.

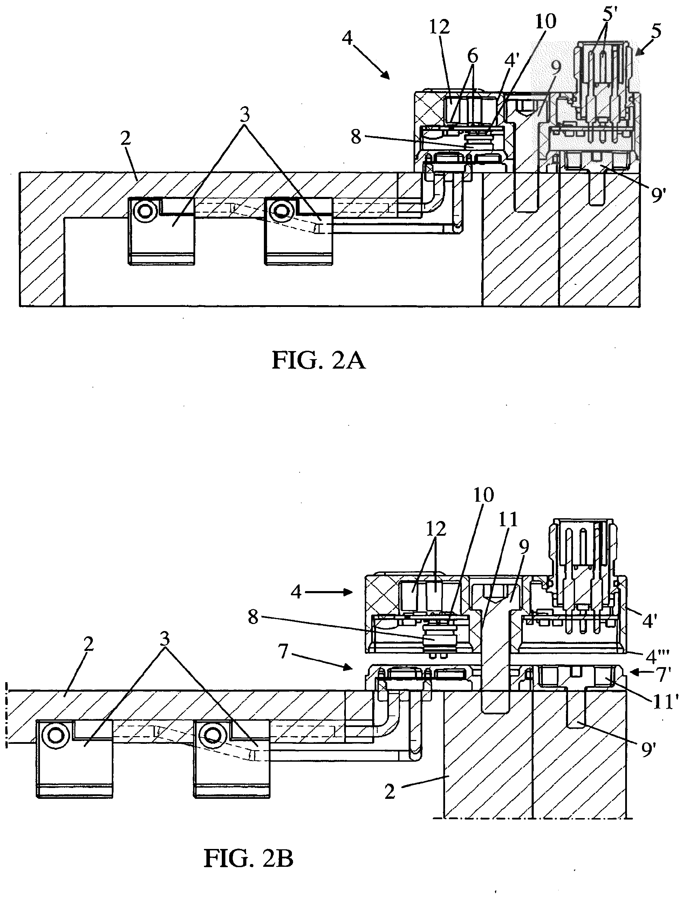

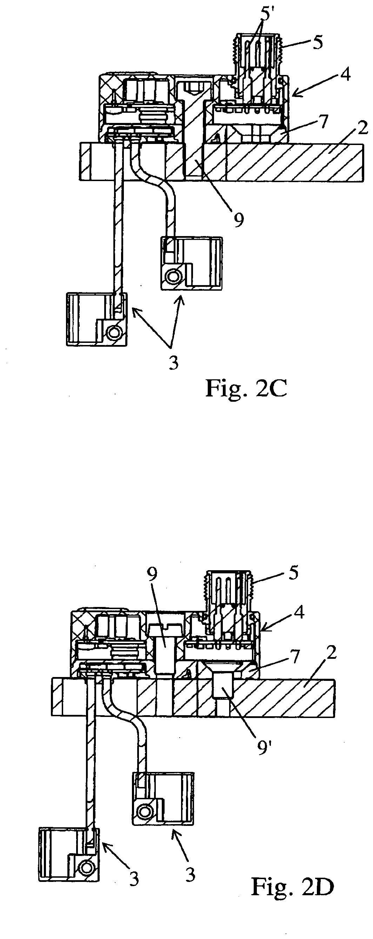

Pour sécuriser la solidarisation et l'assemblage du boîtier 4, il peut être prévu que l'assemblage par emboîtement du boîtier de raccordement 4 avec l'embase 7 soit bloqué ou verrouillé par au moins une vis 9, qui traverse préférentiellement l'embase 7 pour venir en prise dans l'équipement 2, comme le montrent par exemple les figures 2A, 2B et 2C.

En variante, ladite vis 9 de verrouillage peut se limiter à l'embase 7 en termes d'engagement, comme le montre par exemple la figure 2D. Dans les deux cas, la tête de vis est apparente et accessible depuis un espace dégagé de préférence.

Ainsi, l'embase 7 réalise par le biais de l'emboîtement un positionnement mécanique précis (alignement et détrompage) du boîtier de raccordement 4 et garantit simultanément un raccordement électrique bidirectionnel (alimentation et signaux, par exemple sur trois lignes) entre le(s) capteur(s) 3 et le connecteur 5, le cas échéant, par l'intermédiaire de moyens fonctionnels 6 pour les signaux délivrés par le(s) capteur(s) 3.

Bien entendu, le boîtier de raccordement 4 peut constituer un composant fermé, essentiellement plein (par exemple rempli de résine), dont seuls les moyens de liaison mécanique et de connexion électrique avec l'embase 7 sont apparents (la face concernée du boîtier 4 présente une conformation complémentaire de celle de l'embase 7 sur laquelle il s'emboîte).

Alternativement, selon une variante constructive avantageuse, et comme illustré aux figures 2A et 2B au moins, le boîtier de raccordement 4 peut présenter un corps principal 4' en forme de coque, avec une face ouverte 4" et l'embase 7 présenter une structure générale plane sensiblement en forme de plaque, préférentiellement de faible épaisseur, ladite embase 7 étant apte et destinée à obturer la face ouverte 4" de la coque 4' à l'état assemblé du boîtier 4 et de l'embase 7, de manière à former la face arrière non apparente dudit boîtier 4, et constituer avec ce dernier une enveloppe fermée.

Pour optimiser et standardiser l'implantation des moyens fonctionnels 6 dans le boîtier 4, ce dernier peut renfermer, dans son volume interne délimité par la coque 4', au moins une carte à circuit imprimé 10 portant les composants formant la fraction des moyens fonctionnels 6 arrangée dans le boîtier 4, ladite carte 10 étant reliée, d'une part, à des premiers ou seconds moyens 8, 8' de connexion électrique par contact avec des moyens 8, 8' coopérants complémentaires de l'embase 7 et, d'autre part, aux broches fiches ou analogues 5', mâles ou femelles, du connecteur 5 (ou des connecteurs 5) pour la liaison filaire externe.

Bien entendu, pour des raisons de résistance aux chocs, d'oxydation des composants implantés et/ou d'étanchéité, la coque 4' et la carte 10 pourront être au moins partiellement résinées (remplissage/recouvrement avec de la résine époxy par exemple).

Avantageusement, et notamment pour des raisons d'encombrement (possibilité de logement escamoté dans un volume intérieur ou zone renfoncée), les broches de connexion 8 sont logées dans le boîtier 4 et les sites d'appui 8' sont logés dans l'embase 7.

En accord avec une variante de réalisation préférée, l'assemblage par emboîtement de l'embase 7 dans le boîtier de raccordement 4 est de nature étanche, cet emboîtement étant avantageusement maintenu engagé sous contrainte et verrouillé au moyen d'une vis unique 9 aisément accessible depuis l'environnement extérieur et apte et destinée à s'ancrer dans l'embase 7 ou à traverser l'embase 7 pour s'ancrer dans l'équipement 2, ladite embase 7 étant en outre préférentiellement également solidarisée séparément audit équipement 2, par exemple par au moins une autre vis 9' (Figures 2A, 2B et 2D).

Cette solidarisation spécifique et propre de l'embase 7 permet de garantir un maintien ferme de celle-ci sur l'équipement 2 ou analogue lors de l'enlèvement du boîtier 4.

Si besoin, l'embase 7 peut également être démontée et, dans cette optique, une liaison aisément démontable entre les fils de connexion des capteurs 3 et ladite embase 7 peut être prévue.

La vis 9 peut éventuellement présenter une zone de rupture privilégiée au niveau ou au-dessus de la face supérieure de l'embase 7 ou être réalisée en un matériau sécable (par exemple en polymère).

Conformément à une autre caractéristique de l'invention, ressortant notamment des figures 2, 3 et 5, la liaison d'assemblage entre la coque 4' du boîtier de raccordement 4 et l'embase 7 comprend au moins un premier emboîtement périphérique entre le bord libre 4'" de la coque 4', définissant le contour de la face ouverte 4" de ladite coque 4', et le pourtour extérieur de l'embase 7, avec coopération de forme et recouvrement étanche du bord extérieur 7' de l'embase 7 par le bord libre 4'" de la coque 4', et le cas échéant au moins un second emboîtement entre un puits à vis 11 ménagé dans la coque 4' et un puits à vis 11' ménagé dans l'embase 7, les zones d'emboîtement coopérantes formant avantageusement des chicanes ou analogues.

Les zones d'emboîtement peuvent par exemple comprendre des épaulements complémentaires et des surfaces de contact coniques ou circulaires conjuguées et coopérantes.

En accord avec un mode de réalisation préféré de l'invention, ressortant des figures 2 et 3 notamment, il peut être prévu que le bord libre périphérique 4" de la coque 4' du boîtier 4, venant s'emboîter sur le bord extérieur périphérique 7' de l'embase 7 en forme de plaque, préférentiellement pourvu d'un épaulement, présente une structure amincie définissant une zone de rupture privilégiée située dans un plan, confondu ou parallèle au plan d'assemblage du boîtier 4 et de l'embase 7.

Afin de permettre d'effectuer localement un contrôle visuel du bon fonctionnement du dispositif détecteur 1 ou de disposer localement d'une indication sommaire des informations fournies par le(s) capteur(s) 3, le boîtier 4 peut être pourvu d'au moins un moyen 12 de signalisation et/ou d'affichage, monté de manière étanche dans la coque 4' formant le corps principal dudit boîtier 4, et disposé sur une face visible de ce dernier.

Le moyen 12 peut notamment consister en des guides-lumière s'étendant depuis des moyens d'émission lumineuse colorée montés sur la carte 10, jusque vers l'extérieur de la coque 4' du boîtier 4 (Figure 3).

Bien que différentes répartitions des moyens fonctionnels entre les trois composantes structurelles et fonctionnelles 3, 4 et 7 du dispositif détecteur 1 soient possibles, le boîtier 4 comprendra avantageusement, en tant que moyens fonctionnels 6 qui lui sont propres, des moyens d'acquisition, de filtrage et de traitement des signaux délivrés par le(s) capteur(s) 3, des moyens d'extraction, de conditionnement et de transmission des informations fournies par lesdits signaux, des moyens de protection électrique et, le cas échéant, des moyens 12 de signalisation ou d'affichage.

L'invention a également pour objet un équipement industriel et/ou technique 2, par exemple du type machine, poste opérationnel ou installation, comprenant au moins un dispositif détecteur 1 fournissant par exemple des informations de position, de présence, de déplacement ou analogues et relié par au moins une liaison filaire à un moyen distant de contrôle, de commande, d'enregistrement, de transmission ou analogue.

Cet équipement 2 est caractérisé en ce que le ou chaque dispositif détecteur 1 consiste en un dispositif détecteur à constitution structurelle et fonctionnelle modulaire, avec notamment un boîtier de raccordement 4 aisément amovible, tel que décrit précédemment.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif détecteur à structure modulaire constitué de trois parties ou entités constitutives distinctes, à savoir un ou des capteur(s), une embase et un boîtier de raccordement, destiné à être installé sur une machine, un poste de travail, une installation de traitement ou de fabrication ou un équipement industriel et/ou technique analogue,
ledit dispositif détecteur comprenant ledit au moins un capteur et le boîtier de raccordement, relié au(x) détecteur(s) et fixé à un endroit aisément accessible de l'équipement concerné, et ledit dispositif détecteur intégrant des moyens fonctionnels aptes à réaliser des opérations de traitement, de conditionnement et/ou d'évaluation des signaux générés au niveau du ou des capteur(s), le dispositif détecteur comprenant également l'embase (7) formant simultanément interface de montage mécanique pour le boîtier de raccordement (4) sur l'équipement (2) et interface de connexion électrique entre ledit boîtier (4) et le(s) capteur(s) (3),
**caractérisé en ce que** le boîtier de raccordement (4) présente un corps principal (4') en forme de coque, avec une face ouverte (4") et est monté en surface et de manière proéminente sur l'équipement (2) en étant emboîté sur l'embase (7), **en ce que** l'embase (7), en application directe sur l'équipement (2), présente une hauteur apparente faible par rapport à celle du boîtier (4) et fait état d'une conformation générale plane en forme de plaque de faible épaisseur, étant apte et destinée à obturer la face ouverte (4") de la coque (4') à l'état assemblé du boîtier (4) et de l'embase (7), de manière à former la face arrière non apparente dudit boîtier (4), la liaison par emboîtement entre l'embase (7) et le boîtier (4) définissant un plan d'assemblage, lequel correspond sensiblement à un plan de rupture privilégiée de ladite liaison, **en ce que** ledit au moins un capteur (3) consiste en un capteur de présence, de position ou de déplacement et est apte à être monté sur ou dans l'équipement (2), en étant au moins partiellement intégré dans ce dernier, le(s)dit(s) capteur(s) étant situé(s) à distance de l'embase (7) et du boîtier (4) et relié(s) chacun à cette dernière par une liaison filaire, et **en ce que** ledit boîtier (4) comporte au moins un connecteur (5) pour une liaison filaire externe, les liaisons mécanique et électrique entre boîtier (4) et embase (7) étant établies par simple emboîtement du boîtier (4) sur l'embase (7), la connexion électrique amovible étant réalisée par contact, sous contrainte élastique, entre, d'une part, des premiers moyens (8) sous forme de broches, de tiges ou analogues montées dans un corps isolant rigide (13) rapporté ou intégré dans le boîtier (4) et, d'autre part, des seconds moyens (8') sous forme de sites d'appui, de réception ou analogues du type pastille ou plot, disposés au fond d'une dépression ou d'un renfoncement (13') formé(e) dans l'embase (7), le corps isolant (13) s'emboîtant dans le renfoncement (13') à l'état assemblé de l'ensemble boîtier (4)/embase (7), ces deux types de moyens (8, 8') étant arrangés, l'un, dans le boîtier de raccordement (4) et, l'autre, dans l'embase (7) respectivement, la liaison électrique par contact entre les broches (8) et les pastilles (8') étant une liaison par contact ponctuel sous pression élastique, chaque broche (8) étant montée avec faculté de coulissement limité dans le corps isolant (13) et sollicitée élastiquement vers l'extérieur sous l'action d'un ressort (15) associé et les moyens fonctionnels (6) étant répartis physiquement entre le(s) capteur(s) (3), l'embase (7) et le boîtier (4).

2. Dispositif détecteur selon la revendications 1, **caractérisé en ce que** l'assemblage par emboîtement du boîtier de raccordement (4) avec l'embase (7) est bloqué ou verrouillé par au moins une vis (9), qui traverse préférentiellement l'embase (7) pour venir en prise dans l'équipement (2).

3. Dispositif détecteur selon l'une quelconque des revendications 1 et 2, **caractérisé en ce que** le boîtier de raccordement (4) renferme, dans son volume interne délimité par une coque (4'), au moins une carte à circuit imprimé (10) portant les composants formant la fraction des moyens fonctionnels (6) arrangée dans le boîtier (4), ladite carte (10) étant reliée, d'une part, à des premiers ou seconds moyens (8, 8') de connexion électrique par contact avec des moyens (8, 8') coopérants complémentaires de l'embase (7) et, d'autre part, à des broches, fiches ou analogues (5'), mâles ou femelles, du connecteur (5) destiné à la réalisation de la liaison filaire externe.

4. Dispositif détecteur selon l'une quelconque des revendications 1 à 34, **caractérisé en ce que** l'assemblage par emboîtement de l'embase (7) dans le boîtier de raccordement (4) est de nature étanche, cet emboîtement étant avantageusement maintenu engagé sous contrainte et verrouillé au moyen d'une vis unique (9) aisément accessible depuis l'environnement extérieur et apte et destinée à s'ancrer dans l'embase (7) ou à traverser l'embase (7) pour s'ancrer dans l'équipement (2), ladite embase (7) étant en outre préférentiellement également solidarisée séparément audit équipement (2), par exemple par au moins une autre vis (9').

5. Dispositif détecteur selon l'une quelconque des revendications 3 et 4, **caractérisé en ce que** la liaison d'assemblage entre la coque (4') du boîtier de raccordement (4) et l'embase (7) comprend au moins un premier emboîtement périphérique entre le bord libre (4"') de la coque (4'), définissant le contour de la face ouverte (4") de ladite coque (4'), et le pourtour extérieur de l'embase (7), avec coopération de forme et recouvrement étanche du bord extérieur (7') de l'embase (7) par le bord libre (4"') de la coque (4'), et le cas échéant au moins un second emboîtement entre un puits à vis (11) ménagé dans la coque (4') et un puits à vis (11') ménagé dans l'embase (7), les zones d'emboîtement coopérantes formant avantageusement des chicanes ou analogues.

6. Dispositif détecteur selon l'une quelconque des revendications 34 à 56, **caractérisé en ce que** le bord libre périphérique (4") de la coque (4') du boîtier (4), venant s'emboîter sur le bord extérieur périphérique (7') de l'embase (7) en forme de plaque, préférentiellement pourvu d'un épaulement, présente une structure amincie définissant une zone de rupture privilégiée située dans un plan.

7. Dispositif détecteur selon la revendications 1, **caractérisé en ce que** les pastilles (8') sont formées sur une carte (16) à circuits imprimés, disposée dans un logement creux (7") ménagé dans l'épaisseur de l'embase (7) en forme de plaque, reliée électriquement au(x) câble(s) (3') réalisant la liaison filaire avec le(s) capteur(s) (3) et constituant le fond du renfoncement (13') formé dans l'embase (7), ledit logement creux (7") étant préférentiellement comblé par résinage.

8. Dispositif détecteur selon la revendication 7, **caractérisé en ce que** la carte (16) réalisant la connexion électrique entre le(s) capteur(s) (3) et le boîtier (4) est reliée mécaniquement, d'une part, à l'extrémité du ou de chaque câble (3') et, d'autre part, à l'embase (7).

9. Dispositif détecteur selon l'une quelconque des revendications 1 à 8, **caractérisé en ce que** le boîtier de raccordement (4) comprend, en tant que moyens fonctionnels (6) qui lui sont propres, des moyens d'acquisition, de filtrage et de traitement des signaux délivrés par le(s) capteur(s) (3), des moyens d'extraction, de conditionnement et de transmission des informations fournies par lesdits signaux, des moyens de protection électrique et, le cas échéant, au moins un moyen (12) de signalisation et/ou d'affichage, monté de manière étanche dans la coque (4') formant le corps principal dudit boîtier (4).

10. Equipement industriel et/ou technique, par exemple du type machine, poste opérationnel ou installation, comprenant au moins un dispositif détecteur fournissant des informations de position, de présence, de déplacement ou analogues et relié par au moins une liaison filaire à un moyen distant de contrôle, de commande, d'enregistrement, de transmission ou analogue,
équipement (2) **caractérisé en ce que** le ou chaque dispositif détecteur (1) consiste en un dispositif détecteur à constitution structurelle et fonctionnelle modulaire selon l'une quelconque des revendications 1 à 9, avec notamment un boîtier de raccordement (4) aisément amovible.

## Patentansprüche

1. Detektionsvorrichtung mit modularer Struktur bestehend aus drei separaten Bauteilen oder -entitäten, nämlich ein oder mehrere Sensor(en), einen Sockel und eine Anschlussbox, dazu bestimmt, an einer Maschine, einem Arbeitsplatz, einer Verarbeitungs- oder Herstellungsanlage oder einer analogen industriellen und/oder technischen Ausrüstung angebracht zu werden,
wobei die genannte Detektionsvorrichtung diesen mindestens einen Sensor und die Anschlussbox, die mit dem/den Detektor/en verbunden und an einer leicht zugänglichen Stelle der betreffenden Ausrüstung angebracht ist, umfasst,
wobei die genannte Detektionsvorrichtung Funktionselemente enthält, die in der Lage sind, Vorgänge der Verarbeitung, Aufbereitung und/oder Auswertung der Signale auszuführen, die an dem oder den Detektor/en erzeugt werden,
wobei die Detektionsvorrichtung ebenfalls den Sockel (7) umfasst, der gleichzeitig als Schnittstelle zur mechanischen Montage der Anschlussbox (4) an der Ausrüstung (2) dient und als Schnittstelle zur elektrischen Verbindung zwischen der genannten Box (4) und dem/den Sensor/en (3),
**dadurch gekennzeichnet, dass** die Anschlussbox (4) einen schalenförmigen Hauptkörper (4') mit einer offenen Seite (4") aufweist und auf der Oberfläche und hervorstehend an der Ausrüstung (2) angebracht ist, indem sie in den Sockel (7) eingesteckt is und dadurch, dass der Sockel (7) bei unmittelbarer Anbringung an der Ausrüstung (2) eine geringe sichtbare Höhe verglichen mit der Box (4) aufweist und in der allgemeinen Form einer Platte geringer Dicke ausgebildet ist, wobei der genannte Sockel (7) in der Lage und dafür bestimmt ist, im zusammengesetzten Zustand der Box (4) mit dem Sockel (7) die offene Seite (4") der Schale (4') zu verschließen, derart, dass er die nicht offen liegende Rückseite der genannten Box (4) bildet, wobei die Einsteckverbindung des Sockels (7) mit der Box (4) eine Verbindungsebene definiert, die im Wesentlichen einer Sollbruchebene der genannten Verbindung entspricht, dass der genannte mindestens eine Sensor (3) in einem Anwesenheits-, Positions- oder Bewegungsmelder besteht und geeignet ist, auf oder in der Ausrüstung (2) angebracht zu werden und dabei mindestens teilweise in diese eingebaut zu sein, wobei der/die Sensor(en) (3) mit Abstand vom Sockel (7) angeordnet ist/sind und jeweils durch eine Drahtverbindung mit diesem verbunden ist/sind und dadurch, dass die genannte Box (4) mindestens einen Verbinder (5) für eine externe Kabelverbindung aufweist, wobei die mechanischen und elektrischen Verbindungen zwischen Box (4) und Sockel (7) durch einfaches Einstecken der Box (4) in den Sockel (7) hergestellt werden, wobei die trennbare elektrische Verbindung durch Kontakt, unter elastischer Spannung, hergestellt wird zwischen einerseits ersten Mitteln (8) in Form von Nadeln, Stiften oder Ähnlichem die in einem starren, isolierenden Körper (13) angebracht sind, der auf die Box (4) gesetzt oder in sie eingebaut ist, andererseits zweiten Mitteln (8') in Form von Andruck-, Aufnahmestellen oder Ähnlichem, in Form von Augen oder Steckstellen am Grund einer Vertiefung oder eines Rücksprungs (13') angeordnet, die/der im Sockel (7) ausgebildet ist, wobei der isolierende Körper (13) im zusammengesetzten Zustand der Einheit Box (4)/Sockel(7) in die Vertiefung (13') eingesteckt ist, wobei von diesen beiden Arten von Mitteln (8, 8') das eine in der Anschlussbox (4) angeordnet ist und das andere im Sockel (7), wobei die elektrische Verbindung durch Kontakt zwischen den Stiften (8) und den Steckstellen (8') eine Verbindung durch Punktkontakt unter elastischem Druck ist, wobei jeder Stift (8) mit der Möglichkeit zu begrenztem Gleiten im isolierenden Körper (13) angebracht ist und unter der Wirkung einer zugehörigen Feder (15) elastisch nach außen gedrückt wird, und wobei die Funktionselemente (6) physisch auf den/die Sensor/en (3), den Sockel (7) und die Box (4) verteilt sind.

2. Detektionsvorrichtung nach Patentanspruch 1, **dadurch gekennzeichnet, dass** die Steckverbindung der Anschlussbox (4) mit dem Sockel (7) durch mindestens eine Schraube (9) gesperrt cder verriegelt wird, die vorzugsweise den Sockel (7) durchquert, um in der Ausrüstung (2) in Eingriff zu gelangen.

3. Detektionsvorrichtung nach irgendeinem der Patentansprüche 1 und 2, **dadurch gekennzeichnet, dass** die Anschlussbox (4) in seinem von einer Schale (4') umgrenzten Innenraum mindestens eine Karte für gedruckte Schaltungen (10) enthält, die Komponenten trägt, die den Teil der Funktionselemente (6) bilden, der in der Box (4) angeordnet ist, wobei die genannte Karte (10) einerseits mit ersten und zweiten Mitteln (8, 8') zur elektrischen Verbindung durch Kontakt mit komplementären, zusammenwirkenden Mitteln (8, 8') des Sockels (7) verbunden ist und andererseits mit Stiften, Steckern oder Ähnlichem (5'), hervorstehend oder zurückspringend, des Verbinders (5), der zur Herstellung der externen Drahtverbindung bestimmt ist.

4. Detektionsvorrichtung nach irgendeinem der Patentansprüche 1 bis 3, **dadurch gekennzeichnet, dass** die Verbindung durch Einstecken des Sockels (7) in die Anschlussbox (4) abgedichtet ist, wobei diese Einsteckverbindung vorteilhafterweise durch Spannung und mit Hilfe einer einzigen Schraube (9) verriegelt zusammengehalten wird, die von außen leicht zugänglich ist und in der Lage und dafür bestimmt ist, sich im Sockel (7) zu verankern oder den Sockel (7) zu durchqueren, um sich in der Ausrüstung (2) zu verankern, wobei der genannte Sockel (7) außerdem vorzugsweise auch gesondert mit der genannten Ausrüstung (2) verbunden ist, beispielsweise durch mindestens eine andere Schraube (9').

5. Detektionsvorrichtung nach irgendeinem der Patentansprüche 3 und 4, **dadurch gekennzeichnet, dass** die Steckverbindung zwischen der Schale (4') der Anschlussbox (4) und dem Sockel (7) mindestens eine erste umlaufende Steckverbindung zwischen cem freien Rand (4"') der Schale (4'), der die Kontur der offenen Seite (4") der genannten Schale (4') definiert, und dem Außenumfang des Sockels (7), unter Formschluss und abdichtender Überdeckung des Außenrandes (7') des Sockels (7) durch den freien Rand (4"') der Schale (4'), umfasst und gegebenenfalls mindestens eine zweite Steckverbindung zwischen einem Schraubenschacht (11), der in der Schale (4') ausgebildet ist, und einem Schraubenschacht (11'), der im Sockel (7) ausgebildet ist, wobei die zusammenwirkenden Steckverbindungsbereiche vorteilhafterweise Labyrinthe oder Ähnliches bilden.

6. Detektionsvorrichtung nach irgendeinem der Patentansprüche 3 bis 5, **dadurch gekennzeichnet, dass** der freie umlaufende Rand (4") der Schale (4') der Box (4), der auf den umlaufenden Außenrand (7') des plattenförmigen Sockels (7) gesteckt wird, der vorzugsweise mit einer Schulter versehen ist, einen verdünnten Bereich aufweist, der eine in einer Ebene liegende Sollbruchzone darstellt.

7. Detektionsvorrichtung nach Patentanspruch 1, **dadurch gekennzeichnet, dass** die Steckstellen (8') auf einer Karte (16) für gedruckte Schaltungen ausgebildet sind, die in einer hohlen Aufnahme (7") angeordnet ist, die in der Dicke des plattenförmigen Sockels (7) ausgebildet ist, und mit dem/den Kabel(n) (3') elektrisch verbunden ist, die die Drahtverbindung mit dem/den Sensor(en) (3) darstellen und den Boden der Vertiefung (13') bilden, der im Sockel (7) ausgebildet ist, wobei die genannte hohle Aufnahme (7") vorzugsweise mit Harz ausgefüllt ist.

8. Detektionsvorrichtung nach Patentanspruch 7, **dadurch gekennzeichnet, dass** die Karte (16), die die elektrische Verbindung zwischen dem/den Sensor(en) (3) und der Box (4) bildet, einerseits mit dem Ende des oder jedes Kabels (3') und andererseits mit dem Sockel (7) mechanisch verbunden ist.

9. Detektionsvorrichtung nach irgendeinem der Patentansprüche 1 bis 8, **dadurch gekennzeichnet, dass** die Anschlussbox (4) als ihr eigene Funktionselemente (6) Mittel zur Erfassung, Filterung und Verarbeitung der Signale, die von dem/den Sensor(en) (3) ausgegeben werden, Mittel zur Gewinnung, Aufbereitung und Übertragung der Informationen, die von den genannten Signalen geliefert werden, Mittel zum elektrischen Schutz und gegebenenfalls mindestens ein Mittel (12) zur Meldung und/oder Anzeige, das abgedichtet in der Schale (4') montiert ist, die den Hauptkörper der genannten Box (4) bildet, enthält.

10. Industrielle und/oder technische Ausrüstung, beispielsweise der Art einer Maschine, eines Arbeitsplatzes oder einer Anlage, mindestens eine Detektionsvorrichtung umfassend, die Informationen über Stellung, Anwesenheit, Bewegung oder Ähnliches liefert und über mindestens eine Drahtverbindung mit einem fernen Mittel zur Überwachung, Steuerung, Aufnahme, Übertragung oder dergleichen verbunden ist,
Ausrüstung (2), **dadurch gekennzeichnet, dass** die oder jede Detektionsvorrichtung (1) aus einer Detektionsvorrichtung mit strukturell und funktionell modularem Aufbau nach irgendeinem der Patentansprüche 1 bis 9 besteht, insbesondere mit einer leicht abnehmbaren Anschlussbox (4).

## Claims

1. Detector device with modular constitution formed by three separate constructive parts or entities, namely one or several sensor (s), a base and a connection housing, intended to be installed on a machine, a workstation, a processing or production installation or industrial and/or similar technique equipment,
said detector device comprising said at least one sensor and the connection housing, linked to the detector(s) and fixed at an easily accessible point of the equipment concerned, and said detector device incorporating functional means capable of performing processing, conditioning and/or evaluation operations on the signals generated at the sensor(s),
the detector device also comprising the base (7) simultaneously forming mechanical mounting interface for the connection housing (4) on the equipment (2) and electrical connection interface between said housing (4) and the sensor(s) (3), **characterized in that** the connection housing (4) has a main body (4') in shell form, with an open face (4") and is mounted on the surface and prominently on the equipment (2) by being fitted onto the base (7) and **in that** the base (7), placed directly on the equipment (2), exhibits a low apparent height relative to that of the housing (4) and has a general conformation in the form of a plate of small thickness, said base (7) being able and intended to block the open face (4") of the shell (4') in the assembled state of the housing (4) and of the base (7), so as to form the non-visible rear face of said housing (4), the link by fitting between the base (7) and the housing (4), defining an assembly plane, which corresponds substantially to a preferred plane of rupture of said link, **in that** said at least one sensor (3) consists of a presence, position or movement sensor and is capable of being mounted on or in the equipment (2), by being at least partially incorporated therein the sensor(s) (3) being situated at a distance from the base (7) and the housing (4) and are each linked thereto by a wired link and **in that** said housing (4) comprises at least one connector (5) for an external wired link, the mechanical and electrical links between housing (4) and base (7) being established by simple fitting of the housing (4) onto the base (7), the removable electrical connection being produced by a contact, under elastic stress, between first means (8) in the form of pins, rods or similar, mounted in a rigid insulating body (13) added to or incorporated in the housing (4) on the one hand, and second means (8') in the form of bearing, reception or similar sites, of pad or block type, arranged at the bottom of a depression or of an indentation (13') formed in the base (7), on the other hand, the insulating body (13) being fitted into the indentation (13') in the assembled state of the housing (4)/base (7) assembly, these two types of means (8, 8') being arranged, for one, in the connection housing (4) and, for the other, in the base (7) respectively the electrical link by contact between the pins (8) and the pads (8') being a link by spot contact under elastic pressure, each pin (8) being mounted with limited facility to slide in the insulating body (13) and stretched elastically outwards under the action of an associated spring (15) and the functional means (6) being physically divided up between the sensor(s) (3), the base (7) and the housing (4).

2. Detector device according to Claim 1, **characterized in that** the assembly by fitting of the connection housing (4) with the base (7) is immobilized or locked by at least one screw (9), which preferentially passes through the base (7) to come to engage in the equipment (2).

3. Detector device according to any one of Claims 1 and 2, **characterized in that** the connection housing (4) encloses, in its internal volume delimited by a shell (4'), at least one printed circuit board (10) bearing the components forming the fraction of the functional means (6) arranged in the housing (4), said board (10) being linked, on the one hand, to a first or a second electrical connection means (8, 8') by contact with complementary cooperating means (8, 8') of the base (7) and, on the other hand, to pins, prongs or similar (5'), male or female, of the connector (5) intended to produce the external wired link.

4. Detector device according to any one of Claims 1 to 3, **characterized in that** the assembly by fitting of the base (7) in the connection housing (4) is intrinsically tight, this fitting being advantageously kept engaged under stress and locked by means of a single screw (9) easily accessible from the outside environment and able and intended to be anchored in the base (7) or to pass through the base (7) to be anchored in the equipment (2), said base (7) being further preferentially also secured separately to said equipment (2), for example by at least one other screw (9').

5. Detector device according to any one of Claims 3 and 4, **characterized in that** the assembly link between the shell (4') of the connection housing (4) and the base (7) comprises at least one first peripheral fitting between the free edge (4"') of the shell (4'), defining the outline of the open face (4"), of said shell (4'), and the outer perimeter of the base (7), with cooperation of form and tight covering of the outer edge (7') of the base (7) by the free edge (4"') of the shell (4'), and, if necessary, at least one second fitting between a screw well (11) formed in the shell (4') and a screw well (11') formed in the base (7), the cooperating fitting zones advantageously forming chicanes or similar.

6. Detector device according to any one of Claims 3 to 5, **characterized in that** the peripheral free edge (4") of the shell (4') of the housing (4), coming to be fitted onto the peripheral outer edge (7') of the base (7) in plate form, preferably provided with a shoulder, exhibits a thinned structure defining a preferred rupture zone situated in a plane.

7. Detector device according to Claim 1, **characterized in that** the pads (8') are formed on a printed circuit board (16), arranged in a hollow housing (7") formed in the thickness of the base (7) in plate form, linked electrically to the cable (s) (3') producing the wired link with the sensor(s) (3) and constituting the bottom of the indentation (13') formed in the base (7), said hollow housing (7") being preferentially filled by resin tapping.

8. Detector device according to Claim 7, **characterized in that** the board (16) producing the electrical connection between the sensor(s) (3) and the housing (4) is linked mechanically, on the one hand, to the end of the or each cable (3') and, on the other hand, to the base (7).

9. Detector device according to any one of Claims 1 to 8, **characterized in that** the connection housing (4) comprises, as functional means (6) which are specific to it means for acquiring, filtering and processing signals delivered by the sensor(s) (3), means for extracting, conditioning and transmitting information supplied by said signals, electrical protection means and, if necessary, at least one signalling and/or display means (12), tightly mounted in the shell (4') forming the main body of said housing (4).

10. Industrial and/or technical equipment, of machine, operational station or installation type, comprising at least one detector device supplying position, presence, movement or similar information and linked by at least one wired link to a remote monitoring, control, recording, transmission or similar means,
equipment (2) **characterized in that** the or each detector device (1) consists of a detector device with modular structural and functional construction according to any one of Claims 1 to 9, notably with an easily removable connection housing (4).
